# EUROPÄISCHE PATENTSCHRIFT

(11) **EP 2 047 211 B1**
(45) Veröffentlichungstag und Bekanntmachung des Hinweises auf die Patenterteilung: **07.05.2014**
(21) Anmeldenummer: 07801210.1
(22) Anmeldetag: 03.08.2007
(51) Int. Cl.: G01B 11/275, G01B 11/25

(54) **VERFAHREN ZUR BESTIMMUNG DER ACHSGEOMETRIE EINES FAHRZEUGS**
METHOD FOR THE DETERMINATION OF THE AXLE GEOMETRY OF A VEHICLE
PROCÉDÉ DE DÉTERMINATION DE LA GÉOMÉTRIE AXIALE D'UN VÉHICULE

(30) Priorität: 03.08.2006 DE 102006036671
(43) Veröffentlichungstag der Anmeldung: 15.04.2009
(73) Patentinhaber: Dürr Assembly Products GmbH, 66346 Püttlingen (DE); Visicon Automatisierungstechnik Gesellschaft mit beschränkter Haftung, 37130 Gleichen-Wöllmarshausen (DE)
(72) Erfinder: TENTRUP, Thomas, 66663 Mechern (DE); BRUNK, Wolfgang, 37130 Gleichen (DE); KELLER, Wiprecht, 28857 Syke (DE)
(74) Vertreter: Vièl, Christof
(86) Internationale Anmeldenummer: PCT/DE2007/001378
(87) Internationale Veröffentlichungsnummer: WO 2008/014783

(56) Entgegenhaltungen:
- EP-A- 0 280 941
- EP-A2- 0 867 689
- WO-A1-00/71972
- WO-A1-2007/080012
- DE-A1- 3 938 714
- DE-A1- 4 115 445
- DE-A1- 10 155 834
- DE-A1- 10 335 829
- DE-A1- 19 536 294
- DE-A1-102004 035 102
- FR-A- 2 808 082
- US-A- 5 509 090
- US-A- 5 978 077
- US-A1- 2003 210 407
- US-A1- 2006 042 380
- US-B1- 6 657 711

## Beschreibung

Die Erfindung betrifft ein Verfahren zur Bestimmung der Achsgeometrie eines Fahrzeugs nach dem Oberbegriff des Anspruchs 1.

Aus der EP 0 280 941 A1 ist es bekannt, Markierungen auf die Oberfläche eines Reifens aufzubringen. Diese Markierungen reflektieren Licht, das auf die Markierungen auftritt. Es ist beschrieben, dass diffuses oder strukuriertes Licht auf den Reifen und damit auch auf die Markierungen gerichtet werden kann. Weiterhin ist eine Kamera vorhanden, mit der mittels der Methode der Triangulation die Orientierung der Fläche des Reifens bestimmt werden kann. Mittels Auswertemethoden können Effekte wie beispielsweise Beschriftungen auf der Reifenoberfläche ausgeglichen werden. Wird die Messung an einem rotierenden Rad durchgeführt, können Effekte ausgeglichen werden, die auftreten können, wenn wegen einer nicht exakten Montage des Rades die Radachse nicht exakt senkrecht auf der Radebene steht. Die Messergebnisse werden bei der Messung am rotierenden Rad entsprechend gemittelt.

Aus der DE 103 35 829 A1 ist es bekannt, zur Bestimmung der Achsgeometrie eines Fahrzeugs Licht mit einer flächigen Codierung flächig auf das Fahrzeugrad zu projizieren, das diffus reflektierte Licht aus einer anderen Richtung als der Einstrahlrichtung flächig zu erfassen, um daraus dreidimensionale Oberflächenkoordinaten für das topographische Bild der Stirnseite des Rades zu ermitteln. Daraus lässt sich unter anderem die Ebene des Rades ermitteln und damit die Einstellung von Spur und Sturz des Rades. Als Lichtquelle wird ein Beamer verwendet, der in räumlicher Auflösung verschiedene Farben und / oder geometrische Muster erzeugt.

Aus der US 2003/0210407 A1 ist es bekannt, eine Mustererkennung verschiedener Objekte vorzunehmen, indem diese Objekte mit mehreren Spots angestrahlt werden. Dabei können die Spots zeitlich nacheinander zugeschaltet und wieder abgeschaltet werden. Die Einzelbilder werden mit bestimmten Referenzbildern korreliert, um die Mustererkennung vorzunehmen.

Aus der Fr 2 808 081 A1 ist es bekannt, die Lage der Ebene eines Rades eines Fahrzeugs zu bestimmen, indem das Rad mit parallelen Linien beleuchtet wird und indem das gestreute Licht gemessen und ausgewertet wird.

Aus der US-PS 6,657,711 ist es bekannt, die Ebene eines Rades eines Fahrzeugs zu vermessen, indem zwei Laserlichtquellen nicht parallel verlaufende Linien auf das zu vermessende Rad projizieren. Dabei wird die Laserlinie in ihrer Länge so begrenzt, dass nur interessierende Bereiche des Rades angeleuchtet werden. Das Bild der Laserlinien auf dem Rad wird erfasst und ausgewertet, um die Lage der Ebene des Rades zu ermitteln.

Aus der US-PS 5,978,077 ist es bekannt, Laserlinien auf den Reifen eines Rades zu projizieren. Die Projektion erfolgt, um die Lage charakteristischer Punkte des Rades im Raum zu bestimmen. Aus der Lage dieser Punkte werden dann die Parameter abgeleitet, die Ebene des Rades definieren. Dabei werden die zuerst bestimmten Parameter als Korrekturgrößen bei der Bestimmung der weiteren Parameter verwendet. Durch die Lage der charakteristischen Punkte liegen die Laserlinien zum Teil so dicht beieinander, dass diese nicht mehr einzeln wahrnehmbar sind. Deswegen werden für die Bestimmung dieses charakteristischen Punktes die Laserlinien nacheinander auf das Rad projiziert.

Aus der US 2006/0042380 A1 ist es bekannt, mittels eines Lasers einzelne Punkte auf das Rad des Fahrzeugs zu projizieren, wobei diese Punkte auf einer Linie liegen. Aus der Projektion dieser Punkte sollen jeweils die charakteristischen Punkte abgeleitet werden, aus denen dann die Ebene des Rades bestimmt werden soll. Zur Auswertung einer einzelnen Laserlinie sind daher mehrere Messvorgänge notwendig, weil diese Laserlinien jeweils einzeln punktweise gescannt werden.

Die DE 41 15 445 A1 beschreibt allgemein die Möglichkeit, durch Projektion eines Musters mittels eines Lasers auf ein Objekt die Objektstrukturen erkennen zu können.

Die WO 00/71972 beschreibt ein Laserscannerverfahren zur Bestimmung der Lage einer Radebene.

Der vorliegenden Erfindung liegt die Aufgabe zu Grunde, ein Verfahren zur Bestimmung der Achsegeometrie eines Fahrzeugs vorzuschlagen, das eine Bestimmung der Achsgeometrie mit geringem Aufwand zulässt.

Diese Aufgabe wird nach der vorliegenden Erfindung gemäß Anspruch 1 gelöst, indem Licht auf ein Fahrzeugrad projiziert wird, wobei das diffus reflektierte Licht ausgewertet wird, um daraus die Orientierung der Ebene des Fahrzeugrades zu ermitteln, wobei mehrere Linien eines mittels mehrerer Laserlichtquellen erzeugten Laserlichts auf das Rad projiziert werden, wobei zeitlich nacheinander einzelne oder mehrere dieser Linien ausgeblendet bzw. eingeblendet werden. Dabei werden die Linien mittels mehrerer Laserlichtquellen erzeugt, die einzeln ansteuerbar sind. Das diffus reflektierte Licht wird mittels einer oder mittels mehrerer Kameras erfasst, wobei die Auswertung mittels der Stereo-Photogrammetrie erfolgt oder durch eine Bestimmung der Koordinaten der Linien mittels Triangulation, indem aus dem diffus reflektierten Licht der Linien eine Bestimmung der Lage der Radebene mittels statistischer Methoden erfolgt.

Sofern das diffus reflektierte Licht lediglich mittels einer Kamera erfasst wird, muss die Orientierung und Lage des Kamerakoordinatensystems zu jeder Messebene, die durch je eine Lichtquelle erzeugt wird, bekannt und fest sein. Dort wo die Messebenen das Messobjekt schneiden, zeigen sich Linien, deren Koordinaten hierbei mittels Triangulation bestimmt werden.

Sofern mehrere Kameras verwendet werden, kann zur Auswertung die Stereo - Photogrammetrie zur Anwendung kommen. Mehrere Kameras können ebenfalls als Stereokameras ausgewertet werden. Diese Auswertungsarten sind unabhängig von der Lage der Messebenen und somit von der exakten Position und Ausrichtung der Lichtquellen. Vorteilhaft werden bei Verwendung mehrerer Kameras diese hinsichtlich der Zeitpunkte synchronisiert, zu denen von den Kameras Bilder aufgenommen werden.

Die Verwendung von Laserlicht hat den Vorteil eines sehr guten Signal / Rauschverhältnisses. Dies ist besonders beim Einsatz der vorliegenden Erfindung in der Produktion von Fahrzeugen von Vorteil.

Ein weiterer Vorteil der Verwendung von Laserlicht liegt darin, dass dieses monochromatisch ist. Dadurch wird es möglich, Fremdlicht und Umgebungslicht in einfacher Weise zu filtern.

Das Projizieren von Linien hat den Vorteil, dass diese Linien mit der entsprechend verformten Projektion in der Signalauswertung einfach handhabbar sind.

Durch die Projektion mehrerer Linien wird vorteilhaft mit jedem Kamerabild eine große Anzahl von Messpunkten aufgenommen und dadurch gleichzeitig eine hohe Messgeschwindigkeit erreicht.

Indem die Linien einzeln ausblendbar bzw. einblendbar sind, wird weiterhin vorteilhaft erreicht, dass die Zuordnung, welche der am Rad detektierten Linien zu welcher der projizierten Linien gehört, einfach ausgewertet werden kann.

Die Möglichkeit, die Laserlichtquellen ein- und auszuschalten erweist sich als vorteilhaft, weil eine Redundanz geschaffen wird. Auch bei Ausfall einzelner der Laserlichtquellen kann immer noch eine Messung durchgeführt werden.

Außerdem erweist es sich als vorteilhaft, dass durch die einzelne Ansteuerung der Laserlichtquellen diese mit einer sehr kurzen Zeitkonstanten zu- bzw. abgeschaltet werden können. Dies bedeutet, dass auch das Ein- bzw. Ausblenden einzelner Linien sehr schnell erfolgen kann. Dadurch wird vorteilhaft eine gute Messgeschwindigkeit mit einer verlässlichen Aussagekraft erreicht

Bei der Ausgestaltung nach Anspruch 2 wird dazu einer Auswerteeinheit zusammen mit einem von der bzw. den Kameras aufgenommen Bild die Information zugeführt, welche der Linien ausgeblendet war.

Dadurch wird vorteilhaft die Zuordnung einfach herstellbar, welche der detektierten Linien zu welcher der projizierten Linien gehört. Insbesondere lässt sich damit eine Eindeutigkeit herstellen, wenn durch die Kontur des Messobjektes die detektierten Linien nicht mehr eindeutig den projizierten zuzuordnen sind. In einer solchen Situation können nacheinander die in Frage kommenden Linien ausgeblendet werden und damit die Zuordnung umgesetzt werden.

Hierbei erweist es sich als besonders vorteilhaft im Hinblick auf die Messgeschwindigkeit, wenn bei der Bildaufnahme dem auszuwertenden Frame der Kamera bzw. der Kameras eindeutig zuzuordnen ist, welche Linie ein- bzw. ausgeblendet ist.

Ein Ausführungsbeispiel der Erfindung ist in der Zeichnung dargestellt. Es zeigt dabei im Einzelnen:
- Fig. 1:: ein Fahrzeugrad, auf das parallel verlaufende horizontale Linien projiziert werden,
- Fig. 2:: ein Bild, auf dem die von dem Rad diffus reflektierten Linien zu sehen sind,
- Fig. 3:: eine Prinzipdarstellung einer Messanordnung mit einem Lasersystem und zwei Kameras,
- Fig. 4:: eine erste Anordnung von Einzellasern und
- Fig. 5:: eine weitere Anordnung von Einzellasern.

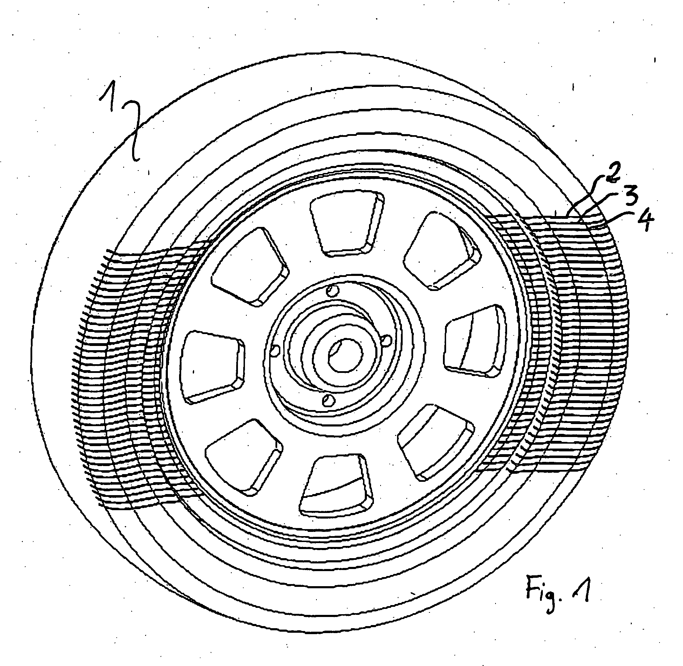

Figur 1 zeigt ein Fahrzeugrad 1, auf das parallel verlaufende horizontale Linien 2, 3, 4 projiziert werden. Es ist zu sehen, dass diese Linien 2, 3, 4 typische Verläufe aufweisen, die der Reifenseitenkontur entsprechen. Aus diesen Reifenseitenkonturen lässt sich über geeignete mathematische Verfahren die Orientierung der Ebene des Fahrzeugrades ermitteln.

Beispielsweise kann man über die Reifenseitenkonturen die Reifenwulstmaxima bestimmen, die bei einem idealen Reifen auf einem Kreis liegen und eine mögliche Ebene des Rades definieren. Im Fall eines Fahrzeugs, das bei der Vermessung auf seinen Rädern steht, ist der Reifen in der Nähe des Aufstandpunktes deformiert, so dass zur Berechnung der Ebene nur Konturen verwendet werden, die nicht in der Nähe des Radaufstandspunktes liegen. Auf Grund der Reifenbeschriftung und des Reifenschlages ermittelt man die Orientierung der Ebene des Fahrzeugrades, die senkrecht zur Drehachse des Rades orientiert ist, über eine sogenannte Umschlagsmessung. Bei einer Umschlagsmessung werden die während einer Radumdrehung erfassten Orientierungen der Ebenen des Fahrzeugrades gemittelt.

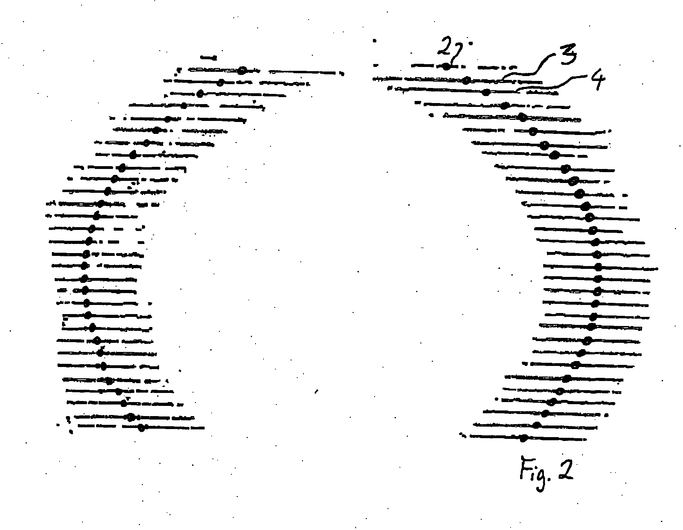

Figur 2 zeigt ein Bild, auf dem die von dem Rad 1 diffus reflektierten Linien 2, 3, 4 zu sehen sind. Die bereits angesprochenen Deformationen durch den Wulst des Reifens sind durch kleine Kreise markiert.

Aus diesen Punkten lässt sich der Verlauf einer Kreislinie berechnen. Die Orientierung der entsprechenden Fläche ergibt die Orientierung des Fahrzeugrades.

Vorteilhaft kommen bei der Bestimmung der Lage der Kreislinie statistische Methoden zur Anwendung, um Messfehler und Abweichungen ausgleichen zu können.

Alternativ zur Kreislinie, die sich aus dem Wulst des Reifens ergibt, wäre es beispielsweise auch möglich, den Knick auszuwerten, der sich in den Linien aus der Felge ergibt.

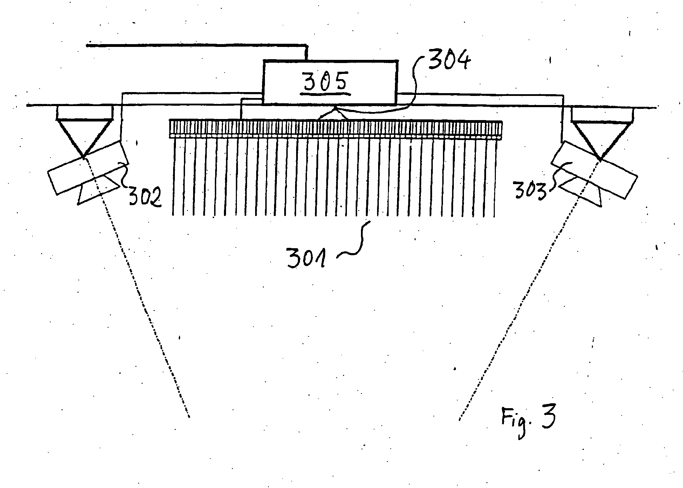

Figur 3 zeigt eine Prinzipdarstellung einer Messanordnung mit einem Lasersystem 301 und zwei Kameras 302 und 303.

Das Lasersystem 301 ist vorteilhaft um eine Achse 304 senkrecht zur Ebene der Zeichnung schwenkbeweglich. Dadurch lässt sich vorteilhaft die Zahl der Messpunkte auf dem Rad erhöhen.

Die Auswertung der diffusen Reflexionen des Rades erfolgt in dem dargestellten Ausführungsbeispiel mit zwei Kameras 302 und 303.

Vorteilhaft sind die einzelnen Laser der Laseranordnung 301 einzeln ansteuerbar. Es ist eine Auswerte- und Steuereinheit 305 zu sehen. Von dieser werden die einzelnen Laser der Laseranordnung 301 angesteuert. Synchronisiert zu dieser Laseransteuerung werden die Kameras 302 und 303 angesteuert, um die entsprechenden Bilder aufzunehmen.

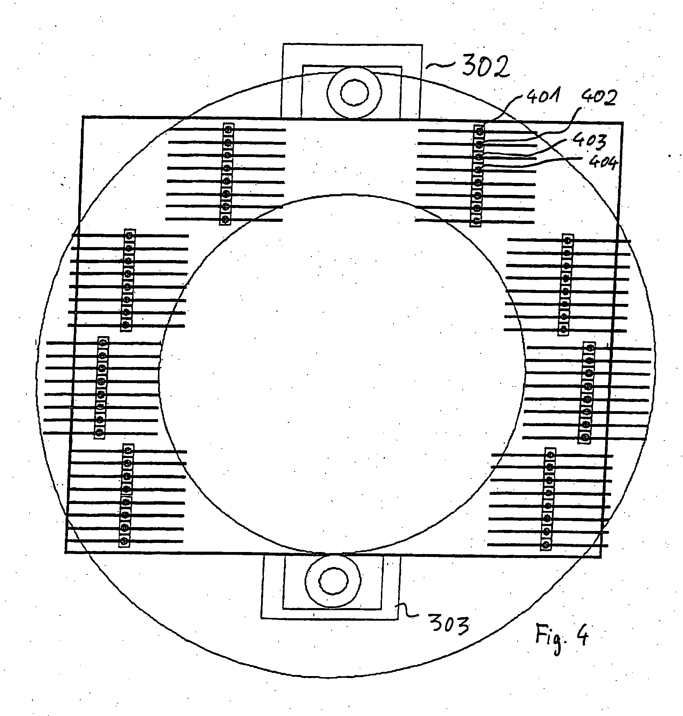

Figur 4 zeigt eine erste Anordnung von Einzellasern 401, 402, 403, 404. Es sind nicht alle Einzellaser mit einer Bezugsziffer versehen. Es ist zu sehen, dass die Einzellaser in Gruppen angeordnet sind, wobei die einzelnen Gruppen zumindest annähernd auf einer Kreislinie liegen. Dadurch wird die Projektion der Laserlinien auf das Rad erleichtert.

In dem Ausführungsbeispiel der Figur 4 sind 8 Felder mit jeweils 8 Einzellasern zu sehen. Durch die Verschwenkbarkeit ist es auch möglich, mit weniger Einzellasern auszukommen. Gegebenenfalls muss bei mehreren Einstellungen gemessen werden, was die für eine Messung benötigte Zeit verlängert.

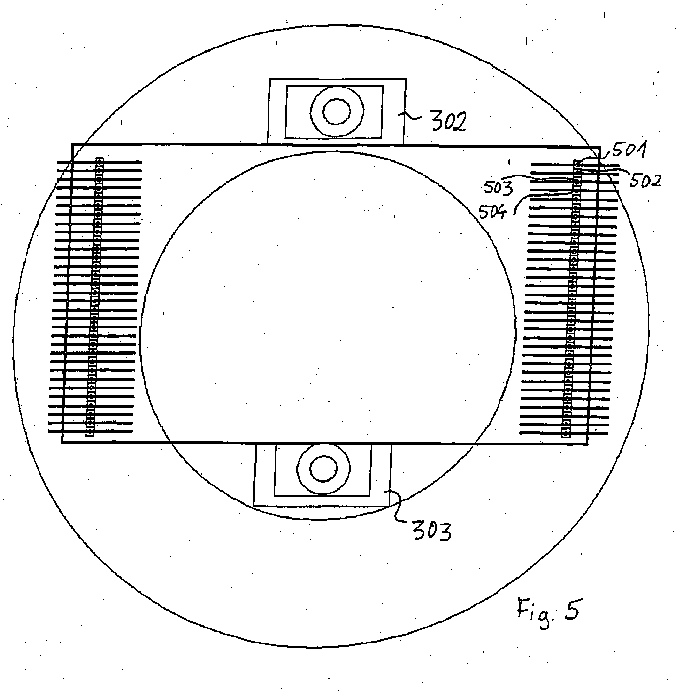

Figur 5 zeigt eine weitere Anordnung von Einzellasern 501, 502, 503, 504, die entlang zweier Linien angeordnet sind. Diese Laseranordnung ist ebenfalls schwenkbeweglich.

## Patentansprüche

1. Verfahren zur Bestimmung der Achsgeometrie eines Fahrzeugs, wobei Licht auf ein Fahrzeugrad (1) projiziert wird, wobei das diffus reflektierte Licht (2, 3, 4) ausgewertet wird, um daraus die Orientierung der Ebene des Fahrzeugrades (1) zu ermitteln,
- indem mehrere Linien eines mittels mehrerer Laserlichtquellen (301, 401, 402, 403, 404, 501, 502, 503, 504) erzeugten Laserlichts auf das Rad (1) projiziert werden, wobei zeitlich nacheinander einzelne oder mehrere dieser Linien ausgeblendet bzw. eingeblendet werden, wobei die Laserlichtquellen (401, 402, 403, 404, 501, 502, 503, 504) einzeln ansteuerbar sind (305), wobei das diffus reflektierte Laserlicht (2, 3, 4) der Linien mittels einer oder mittels mehrerer Kameras (302, 303) erfasst wird, wobei die Auswertung mittels der Stereo-Photogrammetrie erfolgt oder durch eine Bestimmung der Koordinaten der Linien mittels Triangulation,
- und indem aus dem diffus reflektierten Laserlicht der Linien eine Bestimmung der Lage der Radebene mittels statistischer Methoden erfolgt.

2. Verfahren nach Anspruch 1,
**dadurch gekennzeichnet, dass** einer Auswerteeinheit (305) zusammen mit einem von der bzw. den Kameras (302, 303) aufgenommen Bild die Information zugeführt wird, welche der Linien (2, 3, 4) ausgeblendet war.

## Claims

1. Method of determining a vehicle's axle geometry, in which light is projected on a vehicle wheel (1) and the diffusely reflected light (2, 3, 4) is analysed in order to determine therefrom the orientation of the plane of the vehicle wheel (1),
➢ by projecting several lines of laser light generated by several laser-light sources (301, 401, 402, 403, 404, 501, 502, 503, 504) on the wheel (1), one or several of these lines being faded in or out in temporal succession, the laser light sources (401, 402, 403, 404, 501, 502, 503, 504) being individually triggerable (305), the diffusely reflected laser light (2, 3, 4) of the lines being captured by one or by a plurality of cameras (302, 303) and analysed stereophotogrammetrically or by determining the line coordinates via triangulation,
➢ and by determining the position of the wheel plane from the diffusely reflected laser light of the lines by means of statistical methods.

2. Method according to claim 1,
**characterised in that** the information as to which of the lines (2, 3, 4) has been faded out is supplied to an analysing unit (305) along with an image captured by the camera or cameras (302, 303).

## Revendications

1. Procédé pour déterminer la géométrie des axes d'un véhicule, de la lumière étant projetée sur une roue (1) de véhicule, la lumière réfléchie de façon diffuse (2, 3, 4) étant évaluée pour en déduire l'orientation du plan de la roue (1) de véhicule, dans lequel procédé
- Plusieurs lignes d'une lumière laser générée au moyen de plusieurs sources laser (301, 401, 402, 403, 404, 501, 502, 503, 504) sont projetées sur la roue (1), une ou plusieurs de ces lignes étant successivement affichées ou occultées, les sources laser (401, 402, 403, 404, 501, 502, 503, 504) pouvant être commandées séparément (305), la lumière laser des lignes (2, 3, 4) réfléchie de façon diffuse étant mesurée au moyen d'une ou plusieurs caméras (302, 303), l'évaluation étant réalisée au moyen de la photogrammétrie stéréoscopique ou par une détermination des coordonnées des lignes au moyen d'une triangulation, et
- Une détermination de la position du plan de la roue est réalisée à partir de la lumière des lignes réfléchie de façon diffuse au moyen de méthodes statistiques.

2. Procédé selon la revendication 1, **caractérisé en ce que** l'information indiquant la quelle des lignes (2, 3, 4) était occultée ainsi qu'une image prise par la ou les caméras (302, 303) sont transmises à une unité d'exploitation (305).
